(19) Europäisches Patentamt
European Patent Office
Office européen des brevets

(11) Veröffentlichungsnummer : **0 090 178**
**B1**

(12) # EUROPÄISCHE PATENTSCHRIFT

(45) Veröffentlichungstag der Patentschrift : **07.05.86**

(51) Int. Cl.$^4$ : **A 01 N 25/02**

(21) Anmeldenummer : **83101836.1**

(22) Anmeldetag : **25.02.83**

(54) **Pestizide Formulierungen.**

(30) Priorität : **09.03.82 DE 3208333**

(43) Veröffentlichungstag der Anmeldung : **05.10.83 Patentblatt 83/40**

(45) Bekanntmachung des Hinweises auf die Patenterteilung : **07.05.86 Patentblatt 86/19**

(84) Benannte Vertragsstaaten : **AT BE CH DE FR GB IT LI LU NL SE**

(56) Entgegenhaltungen :
**BE-A- 478 478**
**BE-A- 489 839**
**FR-A- 1 009 844**
**FR-A- 2 187 226**
**GB-A- 1 164 321**
**US-A- 3 683 078**
**US-A- 3 894 149**
**US-A- 3 903 273**
**US-A- 4 107 302**
**CENTRAL PATENTS INDEX, BASIC ABSTRACTS JOURNAL, AGDOC, Woche Y 47, 1977, Nr. 83928y, Derwent Publications Ltd., London, GB.**

(73) Patentinhaber : **BAYER AG**
**Konzernverwaltung RP Patentabteilung**
**D-5090 Leverkusen 1 Bayerwerk (DE)**

(72) Erfinder : **Naik, Arundev H.**
**Walter-Flex-Strasse 20**
**D-5090 Leverkusen 1 (DE)**
Erfinder : **Sieveking, Hans Ulrich, Dr.**
**An der Ruthen 4**
**D-5000 Köln 80 (DE)**
Erfinder : **Stendel, Wilhelm, Dr.**
**In den Birken 55**
**D-5600 Wuppertal 1 (DE)**
Erfinder : **Voege, Herbert, Dr.**
**Martin-Buber-Strasse 41**
**D-5090 Leverkusen 3 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 090 178 B1

**Beschreibung**

Die Erfindung betrifft pestizide Formulierungen, deren Herstellung und deren Verwendung in der Bekämpfung von Schädlingen und Lästlingen.

Es sind bereits Sprüh- und Tauchbehandlungen von Tieren oder Objekten bekannt, bei denen die Tiere bzw. Objekte mit einem pestiziden Wirkstoff in einem Gemisch aus Lösungsmitteln, Emulgatoren, Netzmitteln und anderen Hilfsstoffen behandelt werden. Diese Formulierungen liegen als sogenannte Emulsionskonzentrate vor und werden vor Gebrauch mit Wasser auf die gewünschte Anwendungskonzentration verdünnt, d. h. bevor die Anwendung durch Besprühen oder Eintauchen erfolgt. Die herkömmlichen Emulsionskonzentrate zur Verwendung in Tauchbädern oder als Sprühformulierungen werden hergestellt durch Lösen des Wirkstoffs in einem geeigneten hydrophoben Lösungsmittel oder Lösungsmittelgemisch und durch Hinzufügen geeigneter Emulgatoren. Bei Anwendungsverdünnung mit Wasser entstehen Öl-in-Wasser-Emulsionen, deren Stabilität auf sehr verschiedene Weise und Effektivität durch die folgenden Faktoren nachteilig beeinflußt werden können : Zeit, Temperatur, gelöste Salze, spezifisches Gewicht des Emulsionskonzentrates (Auftrennung in Phasen), Verschmutzung der Tauchbäder (Adsorption des Emulsionskonzentrates an Schmutzteilchen und dadurch bedingt beschleunigte Sedimentation) ; selektive Adsorption des Wirkstoffes an das Haarkleid der Tiere und damit beschleunigte Erschöpfung der Tauchbäder ; Wasserverdunstung und Lösungsmittelverdampfung in den Tauchbädern die Konzentrationsänderungen bewirken.

Über lösungsmittelfreie oder verdünnungsmittelfreie Formulierungen wurde in der US-PS 4 195 083 berichtet. In diesen Formulierungen hat man das Lösungsmittel weitestgehend durch flüssige Pestizide ersetzt. Jedoch unterscheiden sich die bei Verdünnung erhaltenen Emulsionen nicht von Emultionen, die konventionelle hydrophobe Lösungsmittel enthalten. Das milchige Aussehen solcher Emulsionen läßt auf relativ große Partikeldurchmesser schließen, die thermodynamisch instabil sind und daher den negativen Einfluß der Verschmutzung in den Tauchbädern nicht beseitigen können.

Mikroemulsionen insektizider Wirkstoffe wie z. B. natürlicher Pyrethroide sind aus Franz. PS 2 187 226 bekannt. Darin wird jedoch beschrieben, daß es bei wasserunlöslichen oder schwer in Wasser löslichen Wirkstoffen und oberflächenaktiven Stoffen erforderlich ist, ein « Hydrotrop », ein zusätzliches Lösungsmittel einzusetzen, um eine homogene Emulsion zu erhalten.

Weiter sind aus der Jap. PS 2122/68 Mittel bekannt, die neben den Wirkstoffen (z. B. Allethrin, Furethrin) oberflächenaktive Stoffe sowie Formaldehydkondensate von Verbindungen der Formel

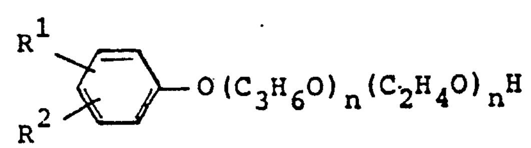

enthalten.

Aus keiner dieser Literaturstellen geht hervor, daß es möglich ist, schwerlösliche synthetische Pyrethroide in oberflächenaktiven Stoffen zu lösen, mit Wasser zu versetzen und dabei zu stabilen Mikroemulsionen zu gelangen.

Gegenstand der Erfindung ist eine pestizide Formulierung, bestehend aus 0,5-50 % 3-[2-(4-Chlorphenyl)-Z-Chlor-vinyl]-2,2-dimethyl-cyclopropancarbonsäure-(α-cyano-4-fluor-3-phenoxy)-benzylester, 5-80 % Alkylarylpolyglycolether oder Polyoxyethylenalkylarylether und 5-90 % Wasser sowie eine pestizide Formulierung bestehend aus 0,5-50 % 3-(2,2-Dichlorvinyl)-2,2-dimethylcyclopropancarbonsäure-2',3',4',5',6'-pentafluorbenzylester, 5-80 % Alkylarylpolyglycolether und 5-90 % Wasser.

Die erfindungsgemäßen pestiziden Formulierungen werden zur Sprüh- und Tauchbehandlung von Tieren und Objekten eingesetzt. Insbesondere eignen sich die erfindungsgemäßen Formulierungen beim Einsatz in Tauchbädern, die bis zu 30 000 l fassen können.

Bevorzugte erfindungsgemäße, oberflächenaktive Mittel sind :

Emulvin W® (Bayer AG), Alkylarylpolyglykolether ;

Emulgator NP 10® (Bayer AG), Alkylarylpolyglykolether ;

Renex 678® (Atlas Chemical Industries), Polyoxyethylenalkylarylether.

Formulierungen

Die erfindungsgemäßen Formulierungen werden hergestellt durch Lösen des Wirkstoffs in einem Emulgator oder in einem Emulgator unter Erwärmung, falls notwendig, und durch Zugabe des erforderlichen Anteils Wasser und unter Rühren mit einem normalen Haftrührer. Eine besondere Homogenisierungsvorrichtung ist nicht erforderlich.

Beispiel 1

| | | |
|---|---|---|
| Wirkstoff: | 3-[2-(4-Chlorphenyl)-2-chlorvinyl]-2,2-dimethylcyclopropancarbon-säure-[α-cyano-4-fluor-3-phenoxybenzyl]-ester | 5 g |
| Emulgator: | Emulvin W$^R$ (Alkylarylpolyglykolether) | 30 g |
| Wasser: | | ad 100 ml |

Beispiel 2

| | | |
|---|---|---|
| Wirkstoff: | wie Beispiel 1 | 2 g |
| Emulgator: | NP 10® (Alkylarylpolyglykolether) | 40 g |
| Wasser: | | ad 100 ml |

Beispiel 3

| | | |
|---|---|---|
| Wirkstoff: | Pentafluorphenyl-methyl-3(2,2-dichlorethenyl)-2,2-dimethyl-cyclopropancarboxylat | 4 g |
| Emulgator: | Emulvin W® (Alkylarylpolyglykolether) | 28 g |
| Wasser: | | ad 100 ml |

**Patentansprüche**

1. Pestizide Formulierung bestehend aus 0,5 bis 50 % 3-[2-(4-Chlorphenyl)-2-chlor-vinyl]-2,2-dimethyl-cyclopropancarbonsäure-(α-cyano-4-fluor-3-phenoxy)-benzylester, 5-80 % Alkylarylpolyglycolether oder Polyoxyethylenalkylarylether und 5-90 % Wasser sowie pestizide Formulierung bestehend aus 0,5-50 % 3-(2,2-Dichlorvinyl)-2,2-dimethylcyclopropancarbonsäure-2',3',4',5',6'-pentafluorbenzylester, 5-80 % Alkylarylpolyglycolether und 5-90 % Wasser.

2. Verfahren zur Herstellung der pestiziden Formulierung gemäß Anspruch 1, dadurch gekennzeichnet, daß man den pestiziden Wirkstoff in dem angegebenen oberflächenaktiven Mittel gegebenenfalls unter Erhitzen löst und anschließend Wasser unter Rühren hinzufügt.

3. Verwendung der pestiziden Formulierungen nach Anspruch 1 in der Bekämpfung von Schädlingen und Lästlingen im Agrar- und Gartensektor, im veterinärmedizinischen Bereich und im Hygienebereich.

**Claims**

1. Pesticidal formulation consisting of 0.5 to 50 % of (α-cyano-4-fluoro-3-phenoxy)-benzyl 3-[2-(4-chlorophenyl)-2-chloro-vinyl]-2,2-dimethyl-cyclopropanecarboxylate, 5-80 % of alkylaryl polyglycol ether or polyoxyethylene alkylaryl ether and 5-90 % of water and a pesticidal formulation consisting of 0.5-50 % of 2',3',4',5',6'-pentafluorobenzyl 3-(2,2-dichlorovinyl)-2,2-dimethylcyclopropanecarboxylate, 5-80 % of alkylaryl polyglycol ether and 5-90 % of water.

2. Process for the preparation of the pesticidal formulation according to Claim 1, characterised in that the pesticidal active compound is dissolved in the surface-active agent mentioned, if appropriate while heating, and then water is added while stirring.

3. Use of the pesticidal formulations according to Claim 1 in combating harmful and troublesome pests in agriculture and horticulture, in the field of veterinary medicine and in the hygiene field.

**Revendications**

1. Composition pesticide consistant en 0,5 à 50 % de 3-[2-(4-chlorophényl)-2-chlorovinyl]-2,2-dimethyl-cyclopropanecarboxylate d'(α-cyano-4-fluoro-3-phénoxy)-benzyle, 5 à 80 % d'éther alkylarylpolyglycolique ou d'éther alkylarylique polyoxyéthyléné et 5 à 90 % d'eau et composition pesticide consistant en 0,5 à 50 % de 3-(2,2-dichlorovinyl)-2,2-diméthylcyclopropane-carboxylate de 2',3',4',5',6'-pentafluorobenzyle, 5 à 80 % d'étheralkylarylpolyglycolique et 5 à 90 % d'eau.

2. Procédé de préparation de la composition pesticide selon la revendication 1, caractérisé en ce que l'on dissout la substance active pesticide dans le produit tensioactif indiqué, éventuellement en chauffant, et on ajoute ensuite l'eau sous agitation.

3. Utilisation des compositions pesticides selon la revendication 1, dans la lutte contre les parasites et les nuisibles dans le domaine agricole et horticole, dans le domaine de la médecine vétérinaire et dans le domaine de l'hygiène.